# EUROPÄISCHE PATENTSCHRIFT

(11) **EP 2 911 253 B1**
(45) Veröffentlichungstag und Bekanntmachung des Hinweises auf die Patenterteilung: **13.07.2016**
(21) Anmeldenummer: 14156075.5
(22) Anmeldetag: 21.02.2014
(51) Int. Cl.: H02B 1/21

(54) **Sammelschienenadapter und System aus Sammelschienen und einem Sammelschienenadapter**
Busbar adapter and system consisting of bus bars and a busbar adapter
Adaptateur de barre collectrice et système constitué de barres collectrices et d'un adaptateur de barre collectrice

(43) Veröffentlichungstag der Anmeldung: 26.08.2015
(73) Patentinhaber: Wöhner GmbH & Co. KG Elektrotechnische Systeme, 96472 Rödental (DE)
(72) Erfinder: Steinberger, Philipp, 96472 Rödental (DE); Masel, Joram, 96317 Kronach (DE); Lenker, Hubert, 96515 Sonneberg (DE)
(74) Vertreter: Isarpatent

(56) Entgegenhaltungen:
- DE-U1- 29 716 201
- US-A1- 2008 220 635

## Beschreibung

Die Erfindung betrifft einen Sammelschienenadapter und ein System aus Sammelschienen und einem Sammelschienenadapter.

Universal-Sammelschienen-Adapter sind bekannt im Steuerungsbau zur Aufnahme von Motorstartern und dergleichen bis zu einer Stromtragfähigkeit von 630A.

Für größere Schaltgeräte und speziell in Energieverteilungen ist aus der DE 20 200 40 19 766 U1 eine Befestigungsmöglichkeit für das Befestigen von Leistungsschaltern auf das 185mm-Schienensystem bekannt. Dabei wird ein Geräteadapter vorgesehen, welcher eine Montageplatte aufweist, die auf einen Sammelschienenträger aufgeschraubt wird. Die Montageplatte mit dem Sammelschienenträger kann auf ein vorhandenes Kupfersammelschienensystem 185mm von vorn schraublos aufgerastet werden. Des Weiteren werden entsprechend gebogene Verbindungsschienen an zugeordneten Sammelschienen aufgesetzt und festgezogen. Die Verbindung zwischen einem Lasttrennschalter und den am oberen Teil der Montageplatte sichtbaren Kupferschienen kann mit Lamellenkupfer oder fertig vorbereiteten und gebogenen Kupferschienen erfolgen.

Der Geräteadapter der DE 20 200 40 19 766 U1 ist ein Bausatz und aufwendig zu montieren. Eine Fehlmontage ist dabei nicht gänzlich ausgeschlossen. Des Weiteren können bei dem Geräteadapter nur vorgebogene Kupferschienen eingesetzt werden, welche aus dem oberen Teil der Montageplatte herausragen. Außerdem wird nur eine Verbindungsschiene pro Phase vorgesehen.

US20080220635 offenbart einen Sammelschienenadapter mit drei Längsunten, deren Breite an die größte Breite von Kontaktelementen angepasst ist und auch schräleren Kontaktelementen aufnehmen Können.

Aufgabe der Erfindung ist es einen verbesserten Sammelschienenadapter bereitzustellen, sowie ein System aus Sammelschienen und einem derartigen Sammelschienenadapter.

Diese Aufgabe wird erfindungsgemäß durch einen Sammelschienenadapter mit den in Patentanspruch 1 angegebenen Merkmalen und ein System mit den in Patentanspruch 15 angegebenen Merkmalen gelöst.

Die Erfindung schafft demnach einen Sammelschienenadapter aufweisend ein Adapter-Unterteil, wobei das Adapter-Unterteil eine Boden mit Aufnahmen zur Aufnahme von Verbindungsschienen aufweist, welche mit Sammelschienen elektrisch kontaktierbar sind, wobei die Zahl der Verbindungsschienen pro Phase, welche in den Aufnahmen des Adapter-Unterteils aufnehmbar sind, variierbar ist und die Verbindungsschienen mit wenigstens einem an dem Adapter-Oberteil des Sammelschienenadapters befestigbaren elektrischen Gerät, insbesondere Schaltgerät, elektrisch verbindbar sind.

Dadurch können pro Phase eine Garnitur aus einer oder aus z.B. zwei Verbindungsschienen in den Aufnahmen des Adapter-Unterteils aufgenommen und mit einem an dem Adapter-Oberteil befestigten Schaltgerät elektrisch kontaktiert werden. Dadurch kann ein breiteres Einsatzspektrum des Sammelschienenadapters bereitgestellt werden.

Gemäß einer möglichen Ausführungsform des erfindungsgemäßen Sammelschienenadapters ist wenigstens eine Verbindungsschiene pro Phase vorgesehen. Wenigstens eine Verbindungsschiene einer Phase kann mit wenigstens einer zusätzlichen Verbindungsschiene verbindbar vorgesehen sein, wobei die Verbindungsschienen dabei gestapelt oder übereinander gestapelt werden.

Durch das Stapeln der Verbindungsschienen kann eine kompakte Bauweise erreicht werden.

In einer weiteren möglichen Ausführungsform des erfindungsgemäßen Sammelschienenadapters sind wenigstens zwei Verbindungsschienen pro Phase vorgesehen, wobei die wenigstens zwei Verbindungsschienen nebeneinander und z.B. parallel zueinander angeordnet sind. Dadurch kann eine flachere Bauweise des Sammelschienenadapters erzielt werden.

Bei einer möglichen Ausführungsform des erfindungsgemäßen Sammelschienenadapters weist der Sammelschienenadapter wenigstens eine Anschlusseinrichtung auf, welche derart ausgebildet ist, die Ströme mehrerer Verbindungsschienen pro Phase zusammenzufassen. Dies erlaubt eine zusätzliche Vereinfachung des Aufbaus und der Montage des Sammelschienenadapters.

In einer anderen möglichen Ausführungsform des erfindungsgemäßen Sammelschienenadapters weist die Anschlusseinrichtung eine Anschlussplatte, wenigstens ein Verbindungsrohr und ein in dem Verbindungsrohr geführtes Schraubenelement auf. Das wenigstens eine Schraubenelement ist dabei an einem Ende mit einer Verbindungsschiene verbindbar und an dem anderen Ende an der Anschlussplatte befestigbar, wobei die Anschlussplatte mit wenigstens einem Schaltgerät verbindbar ist. Auf diese Weise können flache oder plattenartige Verbindungsschienen innerhalb des Sammelschienenadapters sehr einfach kontaktiert werden und es müssen keine vorgebogenen Verbindungsschienen eingesetzt werden, deren eines Ende zur Montage außen frei liegen muss.

Gemäß einer weiteren möglichen Ausführungsform des erfindungsgemäßen Sammelschienenadapters weist das Adapter-Oberteil wenigstens eine Öffnung und beispielsweise mehrere Öffnungen zum Hindurchführen einer Anschlusseinrichtung und zum Verbinden der Anschlusseinrichtung mit einer zugeordneten Verbindungsschiene auf. Dies erlaubt, dass die Anschlusseinrichtung beispielsweise an beiden Enden einer Verbindungsschiene angebracht werden kann und dadurch eine höhere Flexibilität beim Anschluss an ein Schaltgerät erreicht werden kann. Die Anschlusseinrichtung muss lediglich an dem gewünschten Ende der Verbindungsschiene befestigt werden.

In einer möglichen Ausführungsform des erfindungsgemäßen Sammelschienenadapters sind die Öffnungen durch eine jeweilige Abdeckung abdeckbar ausgebildet. Die Abdeckung der jeweiligen Öffnung kann durch einen abnehmbaren Deckel vorgesehen werden. Ebenso kann die Abdeckung der Öffnung auch durchstoßbar ausgebildet sein, beispielsweise als durchstoßbare Kunststoffplatte. Des Weiteren können die Öffnungen auch mittels eines Werkzeugstempels oder mittels Werkzeugstempeln verschließbar ausgebildet sein. Die Abdeckung hat den Vorteil, dass sie das Eindringen von Fremdkörpern verhindert.

In einer anderen möglichen Ausführungsform des erfindungsgemäßen Sammelschienenadapters ist das Adapter-Oberteil symmetrisch ausgebildet. Dabei ist beispielsweise ein Ende des Adapter-Oberteils mit Öffnungen zum Hindurchführen einer Anschlusseinrichtung ausgebildet. Hierdurch kann das Adapter-Oberteil sehr einfach auch um 180° gedreht an dem Adapter-Unterteil vorgesehen werden, wenn beispielsweise die Öffnungen zum Hindurchführen der Anschlusseinrichtung an dem anderen Ende oder gegenüberliegenden Ende benötigt werden.

Gemäß einer möglichen Ausführungsform des erfindungsgemäßen Sammelschienenadapters weist wenigstens eine Aufnahme des Adapter-Unterteils Stege als Auflagefläche für eine in der Aufnahme aufgenommene Verbindungsschiene auf. Die Stege haben den Vorteil, dass die Verbindungsschienen nicht flächig auf dem Adapterboden aufliegen und daher einer zu starken Erwärmung entgegenwirken. Zwischen den Stegen kann der Boden des Weiteren Öffnungen aufweisen, die eine zusätzliche Luftzirkulation und Kühlung erlauben.

In einer anderen möglichen Ausführungsform des erfindungsgemäßen Sammelschienenadapters weist wenigstens eine Halteplatte wenigstens ein oder mehrere Lochbilder von Schaltgeräten auf zum Befestigen eines Schaltgeräts. Auf diese Weise können verschiedene Schaltgeräte an der Halteplatte befestigt werden, ohne dass diese gegen eine andere Halteplatte mit einem entsprechenden Lochbild ausgetauscht werden muss. Dadurch kann ebenfalls das Einsatzspektrum des Sammelschienenadapters erhöht werden und ein Austauschen von Halteplatten zur Befestigung von verschiedenen Schaltgeräten vermieden werden.

In einer weiteren möglichen Ausführungsform des erfindungsgemäßen Sammelschienenadapters weist eine Verbindungsschiene eine Kontaktierungsklemme auf zum Aufschieben auf eine Sammelschiene und zum elektrischen Kontaktieren der Verbindungsschiene mit der Sammelschiene. Auf diese Weise kann der Sammelschienenadapter sehr einfach durch Aufschieben auf die Sammelschienen daran befestigt werden.

Gemäß einer möglichen Ausführungsform des erfindungsgemäßen Sammelschienenadapters weist die Kontaktierungsklemme beispielsweise eine Schraube mit einem Innensechskant auf zum Klemmen der Verbindungsschiene an die in der Kontaktierungsklemme aufgenommene Sammelschiene. Die Schraube ist dabei durch eine Öffnung in dem Adapter-Oberteil von außen berührungssicher betätigbar ist. Aufgrund des Innensechskants kann eine Schraube ohne Schraubenkopf verwendet und dadurch zusätzlich Bauraum eingespart werden.

In einer anderen möglichen Ausführungsform des erfindungsgemäßen Sammelschienenadapters weist der Sammelschienenadapter wenigstens einen Stromwandler und/oder ein Anschlussstück zum Anschließen einer weiteren elektrischen Einrichtung auf. Das Anschlussstück weist beispielsweise eine Öffnung auf zum Hindurchführen wenigstens eines Verbindungsrohrs einer Anschlusseinrichtung. Zum Anschließen einer elektrische Einrichtung, insbesondere eines Wandler, wie z.B. eines Stromwandlers, weist das Anschlussstück wenigstens einen Anschluss auf. Das Anschlussstück lässt sich hierbei sehr einfach mit der Anschlusseinrichtung koppeln und erlaubt das Anschließen beispielsweise wenigstens eines zusätzlichen Wandlers für die Strommessung. Das Vorsehen des Anschlussstücks, für z.B. einen Stromwandler, zwischen der Anschlussplatte und dem Adapter-Unterteil erlaubt eine besonders kompakte Bauweise.

In einer anderen möglichen Ausführungsform des erfindungsgemäßen Sammelschienenadapters sind die Aufnahmen des Adapter-Unterteils derart ausgebildet, dass Verbdingungsschienen unterschiedlicher Länge darin aufgenommen werden können. Dadurch können beispielsweise kurze, mittelange und lange Verbindungsschienen miteinander kombiniert und das Einsatzspektrum des Sammelschienenadapters erweitert werden.

Gemäß einer möglichen Ausführungsform des erfindungsgemäßen Systems ist in den Aufnahmen des Sammelschienenadapters wenigstens eine Verbindungsschiene pro Phase aufgenommen. Die Verbindungsschienen können dabei dieselbe oder eine unterschiedliche Länge aufweisen. Des Weiteren kann die Verbindungsschiene wenigstens einer Phase an beiden Enden durch eine Anschlusseinrichtung kontaktierbar sein. Dazu muss die Anschlusseinrichtung lediglich in die zugeordnete Öffnung an dem richtigen Ende des Adapter-Oberteils eingeführt und mit dem darunter liegenden Ende der Verbindungsschiene verbunden werden. Eine Verbindungsschiene pro Phase eignet sich besonders bei Nennströmen <800A.

In einer anderen möglichen Ausführungsform des erfindungsgemäßen Systems sind die Verbindungsschienen flache oder plattenförmige Verbindungsschienen und insbesondere Kupferschienen. Diese Verbindungsschienen sind kostengünstig in der Herstellung, da sie keinen zusätzlichen Biegeprozess erfordern.

In einer weiteren möglichen Ausführungsform des erfindungsgemäßen Systems sind wenigstens zwei Verbindungsschienen pro Phase in den Aufnahmen des Sammelschienenadapters aufgenommen. Die Verbindungsschienen der verschiedenen Phasen weisen dabei beispielsweise dieselbe oder eine unterschiedliche Länge auf. Des Weiteren kann die Verbindungsschienen wenigstens einer Phase an beiden Enden durch eine Anschlusseinrichtung kontaktierbar sein. Mehrere, z.B. zwei, Verbindungsschienen pro Phase eignen sich besonders bei Nennströmen >800A.

Im Weiteren werden mögliche Ausführungsformen des erfindungsgemäßen mehrpoligen Schaltgerätes unter Bezugnahme auf die beigefügten Figuren näher erläutert.

Es zeigen:
- Fig. 1: eine Explosionsdarstellung eines Sammelschienenadapters gemäß einer Ausführungsform der Erfindung;
- Fig. 2: eine Perspektivansicht des Sammelschienenadapters gemäß Fig. 1;
- Fig. 3: eine Draufsicht auf das Gehäuse des Sammelschienenadapter gemäß der Fig. 1 und 2, wobei zwei lange Schienen jeweils zweifach in dem Gehäuse angeordnet sind;
- Fig. 4: eine Draufsicht auf das Gehäuse des Sammelschienenadapters gemäß der Fig. 1 und 2, wobei lange Schienen jeweils einfach in dem Gehäuse angeordnet sind;
- Fig. 5: eine Draufsicht auf das Gehäuse des Sammelschienenadapters gemäß der Fig. 1 und 2, wobei zwei kurze Schienen jeweils zweifach in dem Gehäuse angeordnet sind;
- Fig. 6: eine Draufsicht auf das Gehäuse des Sammelschienenadapters gemäß der Fig. 1 und 2, wobei kurze Schienen jeweils einfach in dem Gehäuse angeordnet sind;
- Fig. 7: eine weitere Explosionsdarstellung des Sammelschienenadapters gemäß Fig. 1, wobei ein zusätzliches Anschlussstück vorgesehen ist;
- Fig. 8: eine Perspektivansicht des Anschlussstücks gemäß Fig. 7;
- Fig. 9: eine Perspektivansicht des Sammelschienenadapters gemäß Fig. 7, mit dem zusätzlichen Anschlussstück;
- Fig. 10: eine Explosionsdarstellung eines Sammelschienenadapters gemäß einer weiteren Ausführungsform der Erfindung;
- Fig. 11: eine Perspektivansicht eines Anschlussstücks für einen Stromwandler gemäß Fig. 10;
- Fig. 12: eine Perspektivansicht des Sammelschienenadapters gemäß Fig. 10, mit seinen Anschlussstücken für Stromwandler;
- Fig. 13: eine Draufsicht auf das Gehäuse des Sammelschienenadapter gemäß der Fig. 10 und 12;
- Fig. 14: eine Seitenansicht der Schienenpakete aus Fig. 10 und Fig. 13;
- Fig. 15: eine Draufsicht auf das Gehäuse des Sammelschienenadapter gemäß der Fig. 10 und 12, wobei in dem gezeigten Ausführungsbeispiel jedes Schienenpaket zwei übereinander angeordnete Schienen aufweist; und
- Fig. 16: eine Seitenansicht der Schienenpakete aus Fig. 15.

Im Weiteren werden mögliche Ausführungsbeispiele des erfindungsgemäßen Sammelschienenadapters unter Bezugnahme auf die beigefügten Figuren detailliert beschrieben.

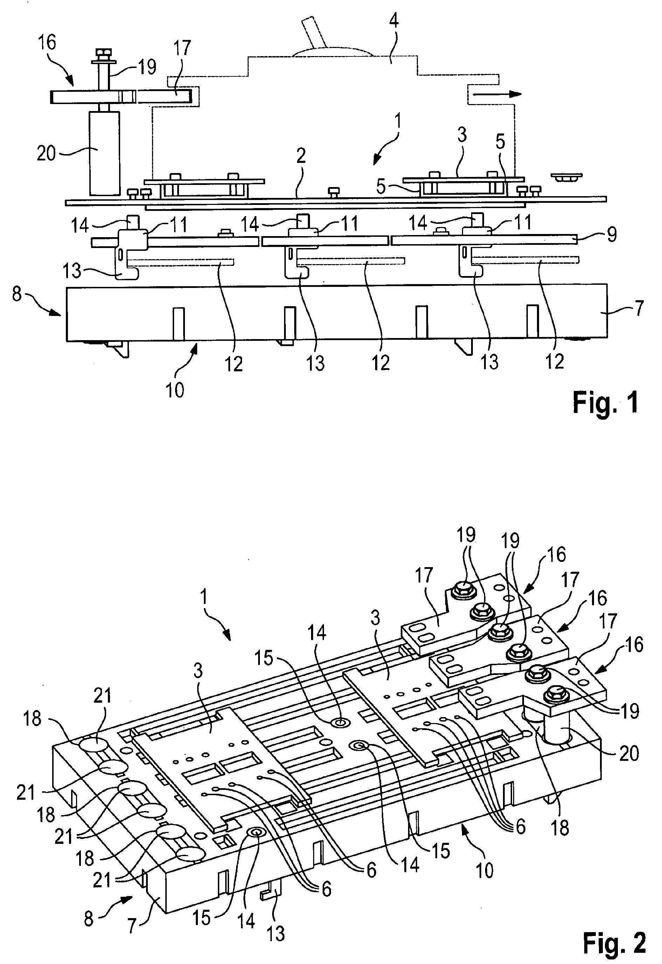

Fig. 1 zeigt eine Explosionsdarstellung eines Sammelschienenadapters 1, beispielsweise eines Dreiphasen-Sammelschienenadapters, gemäß einer Ausführungsform der Erfindung. Fig. 2 zeigt wiederum eine Perspektivansicht des zusammengebauten Sammelschienenadapters 1 gemäß Fig. 1.

Der Sammelschienenadapter 1 ist in dem in Fig. 1 und 2 gezeigten Ausführungsbeispiel beispielsweise als ein Dreiphasen-Sammelschienenadapter ausgebildet, wobei der Sammelschienenadapter 1 gemäß der Erfindung auch ein oder zwei oder mehr als drei Phasen aufweisen kann. Der Sammelschienenadapter 1 weist ein Adapter-Oberteil 2 auf, auf welchem Halteplatten 3 befestigt sind. Das Adapter-Oberteil 2 ist hierbei z.B. aus Kunststoff hergestellt oder einem anderen für das Adapter-Oberteil geeigneten Material oder Materialkombination.

Die Halteplatten 3 dienen zur Befestigung von Schaltgeräten 4, z.B. Leistungsschaltern, wie mit einer gepunkteten Linie in Fig. 1 angedeutet ist. Dabei werden die Halteplatten 3 auf der Oberseite des Adapter-Oberteils 2 befestigt, beispielsweise verschraubt. In dem in Fig. 1 und 2 gezeigten Ausführungsbeispiel weisen die Halteplatten 3 z.B. Distanzabschnitte 5 auf, mit welchen die Halteplatten 3 beabstandet zu der Oberseite des Adapter-Oberteils 2 an diesem befestigt sind. Auf diese Weise kann einem zu starken Erwärmen des Adapter-Oberteils 2 entgegengewirkt werden. Die Erfindung ist auf diese spezielle Ausgestaltung jedoch nicht beschränkt. Des Weiteren können die Halteplatten auch ohne solche Distanzabschnitte auf dem Adapter-Oberteil 2 aufliegend vorgesehen sein, je nach Funktion und Einsatzzweck.

Zur Befestigung von elektrischen Geräten, insbesondere Schaltgeräten 4, weist die jeweilige Halteplatte 3 ein Befestigungs-Lochbild 6 von einem oder mehreren Schaltgeräten auf, wie in Fig. 2 gezeigt ist. Das Befestigungs-Lochbild 6 der jeweiligen Halteplatte 3 bildet dabei vorzugsweise ein Befestigungs-Lochbild 6 der gängigsten Schaltgeräte, beispielsweise Leistungsschalter usw..

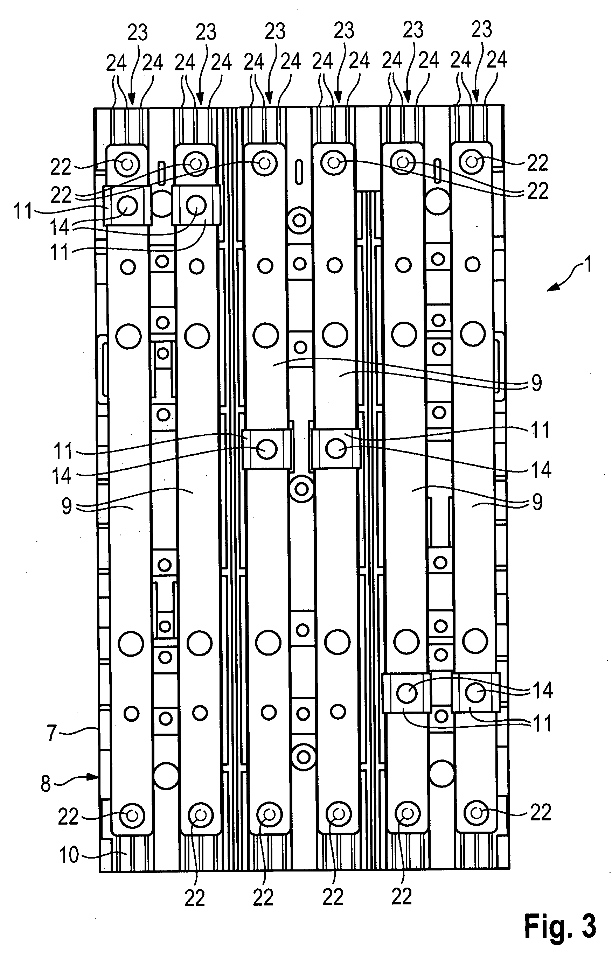

Des Weiteren weist der Sammelschienenadapter 1 ein Gehäuse 7 als Adapter-Unterteil 8 auf, in welcher flache oder plattenförmige Verbindungs- oder Stromschienen 9, insbesondere Kupferschienen, aufnehmbar sind. Dazu sind an einem Boden 10 des Gehäuses 7 Aufnahmen vorgesehen zum Aufnehmen der Verbindungsschienen 9, wie in den nachfolgenden Fig. 3 bis 6 gezeigt ist. Die Aufnahmen sind beispielsweise als Vertiefung in dem Gehäuseboden 10 ausgebildet oder der Gehäuseboden 10 ist als ebene Fläche mit Vorsprüngen versehen, welche eine Aufnahme bilden zum Einlegen und Positionieren der jeweiligen Verbindungsschiene 9.

Der Gehäuseboden 10 weist z.B. Stege als Auflageflächen für die Verbindungsschienen 9 auf. Die Stege als Auflageflächen haben den Vorteil, dass sie ein zu starkes Erwärmen des Gehäusebodens verhindern. Zwischen den Stegen kann der Boden des Weiteren Öffnungen aufweisen, die eine zusätzliche Luftzirkulation und Kühlung erlauben.

Die jeweilige Verbindungsschiene 9 wird dabei mittels einer Kontaktierungsklemme 11 elektrisch kontaktiert.

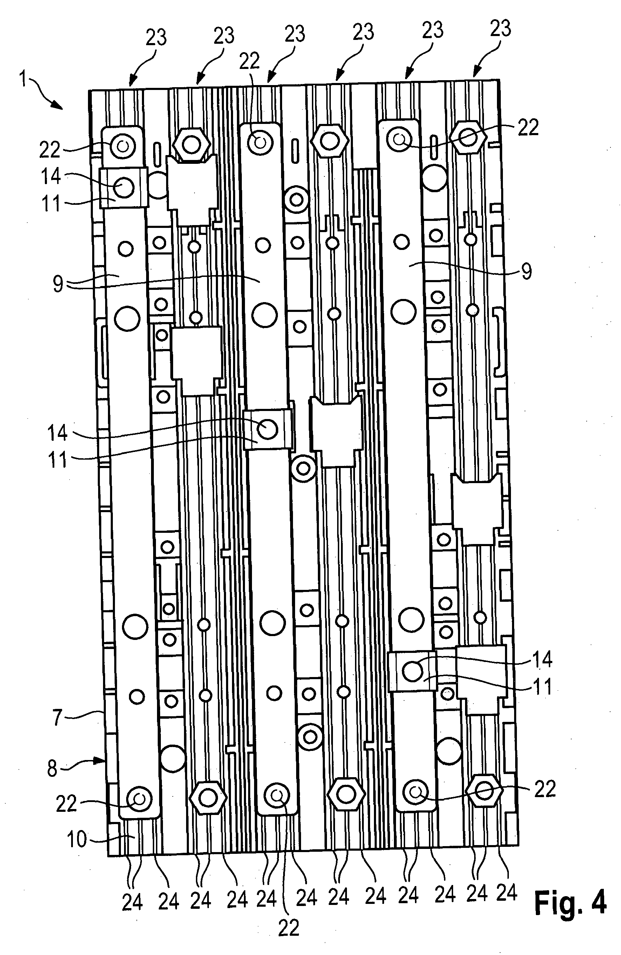

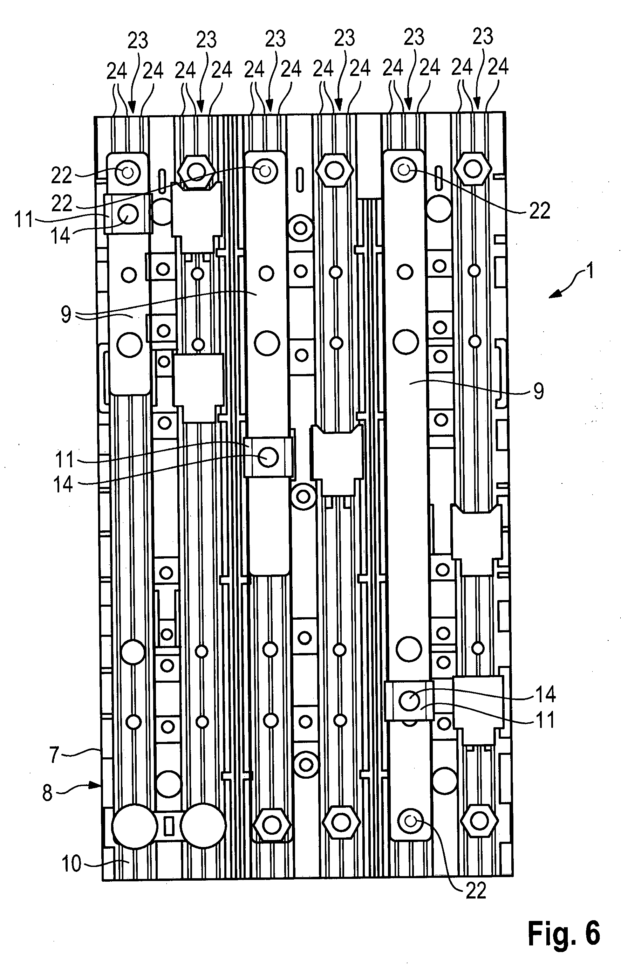

Das Adapter-Unterteil 8 oder Gehäuse 7 ist derart gestaltet, dass bei unterschiedlichen Nennströmen die Bestückung mit Verbindungsschienen 9 flexibel vorgenommen werden kann. Für jede der drei Phasen L1, L2 und L3 des Dreiphasen-Sammelschienenadapters kann eine Garnitur von beispielsweise bis zu zwei Verbindungsschienen in das Gehäuse eingesetzt werden. So wird beispielsweise bei Nennströmen <800A je Phase nur eine Garnitur von jeweils einer Verbindungsschiene pro Phase eingelegt, wie in nachfolgenden Fig. 4 und 6 gezeigt ist. Folglich werden in diesem Fall auch nur drei anstatt sechs Kontaktierungsklemmen zur elektrischen Kontaktierung der drei Verbindungsschienen benötigt.

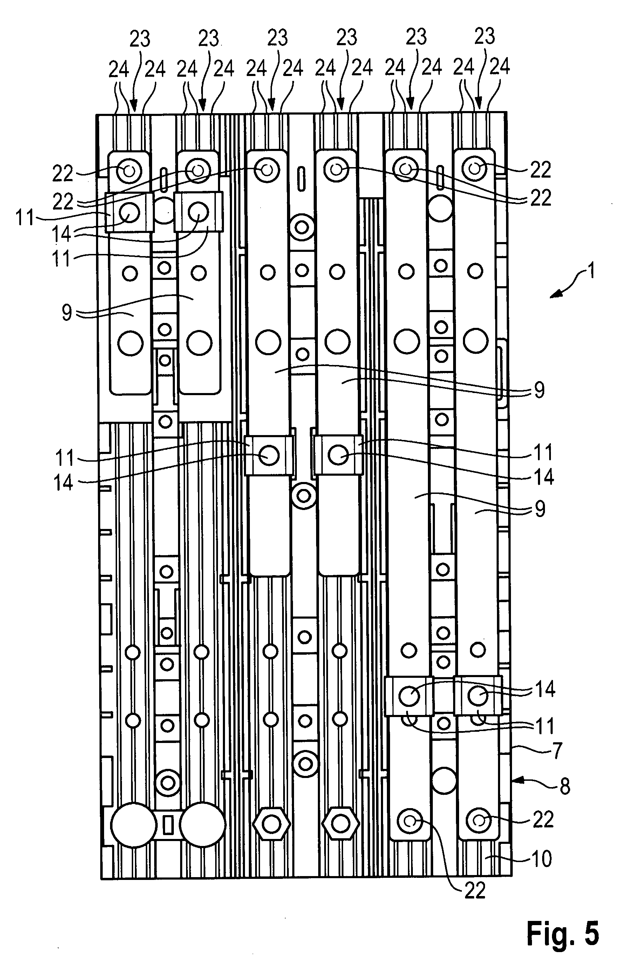

Bei Nennströmen >800A werden parallele Verbindungsschienen 9 oder Parallel-Schienen in die zugeordneten Aufnahmen des Gehäuses 7 eingelegt und mit jeweils zwei Kontaktierungsklemmen kontaktiert, wie in Fig. 1 und nachfolgenden Fig. 3 und 5 gezeigt ist. Die Parallel-Schienen umfassen dabei beispielsweise zwei Verbindungsschienen 9 für jede Phase L1, L2 und L3, die in dem Gehäuse 7 parallel zueinander angeordnet werden. Die Garnitur aus zwei Verbindungsschienen 9 je Phase L1, L2 und L3 wird in das Gehäuse 7 eingesetzt und mit zwei zugeordneten Kontaktierungsklemmen 11 elektrisch kontaktiert. Dem entsprechend werden in diesem Fall sechs Kontaktierungsklemmen zur elektrischen Kontaktierung der sechs Verbindungsschienen eingesetzt.

Der Sammelschienenadapter 1 wird anschließend auf zugeordnete Sammelschienen 12 aufgesteckt.

Die Sammelschienen 12 werden dabei, wie in dem Ausführungsbeispiel in Fig. 1 mit einer gestrichelten Linie angedeutet ist, in entsprechende Kontaktaufnahmen 13, z.B. C-förmige Kontaktaufnahmen, der Kontaktierungsklemmen 11 eingeführt und an der zugeordneten Verbindungsschiene 9 festgeklemmt und elektrisch kontaktiert. Die jeweilige Kontaktierungsklemme 11 weist dazu in dem in den Fig. 1 und 2 gezeigten Ausführungsbeispiel, eine Schraube 14 auf, welche von außen durch das Adapter-Oberteil 2 für einen Benutzer berührungssicher zugänglich ist und durch den Benutzer festgezogen werden kann, um die Sammelschiene 12 und die jeweils zugeordnete Verbindungsschiene 9 aneinander zu befestigen und elektrisch zu kontaktieren. Die Schraube 14 weist dabei beispielweise einen Innensechskant auf und ist durch eine zugeordnete Öffnung 15 in dem Adapter-Oberteil 2 von außen für einen Benutzer zugänglich. Die Schraube 14 ist dabei ausreichend von der Unterseite des Adapter-Oberteils 2 beabstandet, so dass ein Benutzer mit einem Finger die Schraube 14 durch die Öffnung 15 nicht ungewollt berühren kann. Die Erfindung ist auf diese spezielle Ausgestaltung der Kontaktierungsklemme 11 und ihrer Schraube 14 jedoch nicht beschränkt. Es kann jede andere Kontaktierungsklemme vorgesehen werden, welche geeignet ist die Sammelschiene 12 und die jeweils zugeordnete Verbindungsschiene 9 elektrisch zu kontaktieren. Dabei ist die Erfindung insbesondere nicht auf eine Schraube mit einem Innensechskant beschränkt zum Verbinden und elektrischen Kontaktieren der Sammelschiene 12 mit der jeweiligen Verbindungsschiene 9.

Mit Anschlusseinrichtungen 16 werden die Ströme der Verbindungsschienen 9 zu einem jeweiligen Schaltgerät 4 geführt, das an den Halteplatten befestigt ist. Ein Schaltgerät 4 ist dabei, wie zuvor beschrieben, mit einer gepunkteten Linie in Fig. 1 angedeutet. Falls z.B. jeweils zwei Verbindungsschienen 9 für jede Phase L1, L2 und L3 vorgesehen sind, werden die Ströme der beiden Verbindungsschienen 9 mittels der Anschlusseinrichtung 16 zusammengefasst und zu dem Schaltgerät 4 geführt, wie in Fig. 2 gezeigt ist. Die Anschlusseinrichtung 16 weist dabei, wie in dem Ausführungsbeispiel in Fig. 1 und 2 gezeigt ist eine Anschlussplatte 17 auf zum Verbinden der Verbindungsschiene oder, wie in Fig. 2 gezeigt ist, zweier Verbindungsschienen 9 für jede Phase L1, L2, L3 mit einem Schaltgerät 4, z.B. einem Leistungsschalter.

Für die Anschlusseinrichtungen 16 sind zum Verbinden mit der jeweiligen Verbindungsschiene 9 Öffnungen 18 oder Durchführungslöcher in dem Adapter-Oberteil 2 vorgesehen. Die Öffnungen 18 sind dabei oberhalb z.B. eines oder beider Enden der in dem Adapter-Unterteil 8 bzw. Gehäuse 7 aufgenommenen Verbindungsschienen 9 angeordnet, so dass die Verbindungsschienen 9 an wenigstens einem oder vorzugsweise ihren beiden Enden mit der zugeordneten Anschlusseinrichtung 16 verbindbar sind. Die Anschlusseinrichtungen 16 müssen lediglich am oberen oder unteren Ende der Verbindungsschienen 9 in das Adapter-Oberteil 2 eingesetzt und mit dem jeweils darunter liegenden Ende der Verbindungsschiene 9 verbunden werden.

Die Erfindung ist aber auf die Verbindung der Anschlusseinrichtung 16 an den Enden der Verbindungsschienen 9 nicht beschränkt. Die Anschlusseinrichtungen 18 und die dazu gehörenden Öffnungen 18 in dem Adapter-Oberteil 2 können an jeder anderen Position vorgesehen werden zum Kontaktieren der Anschlusseinrichtung mit einer zugeordneten Verbindungsschiene. Beispielweise ist es auch möglich, dass die Anschlusseinrichtung die jeweilige Verbindungsschiene in deren Mitte kontaktiert und dem entsprechend die zugeordnete Öffnung in dem Adapter-Oberteil oberhalb der Mitte der Verbindungsschiene vorgesehen ist.

Die Anschlusseinrichtung 16 weist jeweils die Anschlussplatte 17 zum Verbinden mit einem auf der Halteplatte 3 befestigen Schaltgerät 4 auf. Des Weiteren ist an der Anschlussplatte 17 wenigstens ein Schraubenelement 19 befestigt. Das Schraubenelement 19 ist in einem Verbindungsrohr 20 geführt und wird an der zugeordneten Verbindungsschiene 9 befestigt, z.B. mit dieser verschraubt. Das Verbindungsrohr 20 wird mit dem Schraubenelement 19 dazu durch die Öffnung 18 in dem Adapter-Oberteil 2 hindurchgeführt und das Schraubenelement 19 in das zugeordnete Gewinde der Verbindungsschiene 9 geschraubt. Dadurch kann ein Schaltgerät 4 mittels der Anschlusseinrichtung 16 und einer jeweiligen Verbindungsschiene 9 mit der Sammelschiene 12 elektrisch verbunden werden. Des Weiteren können die Ströme von zwei Verbindungsschienen 9 einer Phase L1, L2 oder L3 mittels einer gemeinsamen Anschlussplatte 17 der Anschlusseinrichtung 16 zusammengefasst und zu dem Schaltgerät 4 geführt, wie in dem Ausführungsbeispiel in Fig. 1 und 2 gezeigt ist. Dabei werden die beiden Schraubelemente 19, welche jeweils in einem zugeordneten Verbindungsrohr 20 geführt sind, mit der gemeinsamen Anschlussplatte 17 verbunden, z.B. daran angeschraubt.

Die Öffnungen 18 auf der Seite des Adapter-Oberteils 2, die nicht benötigt werden bzw. in die keine Verbindungsrohre 20 mit Schraubenelementen 19 eingesetzt werden, sind z.B. mit Abdeckungen 21 für die Verbindungsrohre 20 verschlossen, so dass keine spannungsführenden Teile berührt werden können. Die Abdeckungen 21 können dabei als Deckel in den Öffnungen vorgesehen werden, welche entfernt werden, wenn ein Verbindungsrohr 20 mit einem Schraubenelement 19 darin eingesetzt wird. Ebenso können die Öffnungen 18 auch mit einer Abdeckung 21 in Form einer durchstoßbaren Abdeckung, beispielsweise einer Kunststoffplatte usw., ausgebildet sein. Zum Einsetzen durchstößt das Verbindungsrohr 20 mit seinem Schraubenelement 19 die Abdeckung 21 der Öffnung 18.

Alternativ können die Öffnungen 18 im Adapter-Oberteil 2 auch mit nicht dargestellten Wechselstempel im Werkzeug einseitig verschlossen werden. In einer weiteren nicht dargestellten Ausführungsform kann das Adapter-Oberteil 2 symmetrisch gestaltet sein, so dass nur eine Seite mit den Öffnungen bzw. Durchführungslöchern versehen ist und bei Bedarf das Adapter-Oberteil 180° verdreht montiert werden. In dem Ausführungsbeispiel wie es in den Fig. 1 und 2 gezeigt ist, ist das Adapter-Oberteil 2 symmetrisch ausgebildet, so dass die Öffnungen 18 zum Hindurchführen der Anschlusseinrichtungen 16 an einer Seite oder einem Ende auch weggelassen werden könnten. Stattdessen kann das Adapter-Oberteil um 180° gedreht an dem Adapter-Unterteil vorgesehen werden, wenn an diesem Ende oder dieser Seite die Öffnungen zum Hindurchführen der Anschlusseinrichtungen benötigt wird.

In Fig. 3 ist eine Draufsicht auf das Adapter-Unterteil 8 oder Gehäuse 7 des Sammelschienenadapters 1 gemäß der Fig. 1 und 2 gezeigt. Dabei sind zwei lange Schienen 9 für jede der drei Phasen L1, L2 und L3 in dem Gehäuse 7 angeordnet. Diese langen Verbindungsschienen 9 erstrecken sich hierbei im Wesentlichen über die gesamte Länge des Gehäuses 7. Des Weiteren weisen die Verbindungsschienen 9 an ihren beiden Enden jeweils eine Befestigungsmöglichkeit, beispielsweise ein Gewinde 22, auf, an welchem die Anschlusseinrichtung befestigt werden kann.

Wie zuvor mit Bezug auf die Fig. 1 und 2 beschrieben wurde, weist das Gehäuse 7 einen Boden 10 mit Aufnahmen 23 zum Aufnehmen oder Einlegen der Verbindungsschienen 9 auf. Die Aufnahmen 23 weisen dabei, wie in Fig. 3 gezeigt ist, Stege 24 als Auflageflächen für die Verbindungsschienen 9 auf.

In dem in Fig. 3 gezeigten Ausführungsbeispiel werden als Parallel-Schienen beispielsweise zwei Verbindungsschienen 9 pro Phase L1, L2 und L3 parallel zueinander in dem Gehäuse 7 auf den Stegen 24 angeordnet und mit zwei Kontaktierungsklemmen 11 kontaktiert. Eine Garnitur von jeweils zwei Verbindungsschienen 9 pro Phase L1, L2 und L3 kann beispielsweise bei Nennströmen von >800A eingesetzt werden. Die jeweiligen Paare von Kontaktierungsklemmen 11 der Verbindungsschienen 9 sind beispielsweise zueinander versetzt angeordnet, wie in Fig. 3 gezeigt ist. Die Kontaktierungsklemmen 11 weisen jeweils z.B. eine Schraube 14 mit einem Innensechskant auf, die durch eine entsprechende Öffnung in dem Adapter-Oberteil von außen durch einen Benutzer berührungssicher betätigt werden kann, zum Bereitstellen oder Lösen eines elektrischen Kontakts zwischen der Verbindungsschiene 9 und einer zugeordneten Sammelschiene.

Fig. 4 zeigt eine Draufsicht auf das Gehäuse 7 des Sammelschienenadapters 1 gemäß der Fig. 1 und 2. Dabei unterscheidet sich das Ausführungsbeispiel in Fig. 4 von dem Ausführungsbeispiel in Fig. 3 lediglich dadurch, dass nur eine lange Verbindungsschiene 9 pro Phase L1, L2 und L3 in dem Gehäuse 7 angeordnet ist. Diese Anordnung kann beispielsweise bei Nennströmen von <800A gewählt werden. Dabei wird nur eine Garnitur von jeweils einer Verbindungsschiene 9 pro Phase eingelegt. Dem entsprechend werden in diesem Fall auch nur drei anstatt sechs Kontaktierungsklemmen 11 zur elektrischen Kontaktierung der drei Verbindungsschienen 9 benötigt.

Des Weiteren ist in Fig. 5 eine Draufsicht auf das Gehäuse 7 des Sammelschienenadapters 1 gemäß der Fig. 1 und 2 gezeigt, wobei zwei kurze, zwei mittellange und zwei lange Verbindungsschienen 9 jeweils zweifach in dem Gehäuse 7 angeordnet sind. Die kurzen Verbindungsschienen 9 erstrecken sich dabei beispielsweise lediglich über im Wesentlichen ein Drittel der Länge des Gehäuses 7 und die mittellangen Verbindungsschienen 9 über im Wesentlichen zwei Drittel der Länge des Gehäuses 7. Des Weiteren weisen die kurzen und mittleren Verbindungsschienen 9 z.B. nur an einem Ende eine Befestigungsmöglichkeit, z.B. ein Gewinde 22, zum Befestigen der Anschlusseinrichtung auf. Die Garnitur aus zwei Verbindungsschienen 9 pro Phase L1, L2 und L3 wird über jeweils zwei Kontaktierungsklemmen 11 elektrisch kontaktiert.

Statt z.B. zwei Verbindungsschienen 9 pro Phase L1, L2 und L3 wie in Fig. 5 kann, wie in der Draufsicht auf das Gehäuse 7 des Sammelschienenadapters 1 in Fig. 6 gezeigt ist, auch nur eine kurze, eine mittellange und eine lange Verbindungsschiene 9 pro Phase in dem Gehäuse 7 angeordnet sein.

Wie in dem Ausführungsbeispiel in Fig. 5, weisen auch in dem Ausführungsbeispiel in Fig. 6 die kurze und mittellange Verbindungsschiene 9 nur an einem Ende eine Befestigungsmöglichkeit, z.B. ein Gewinde 22, zum Befestigen der Anschlusseinrichtung auf. Des Weiteren ist eine Kontaktierungsklemme 11 pro Verbindungsschiene 9 zum elektrischen Kontaktieren vorgesehen.

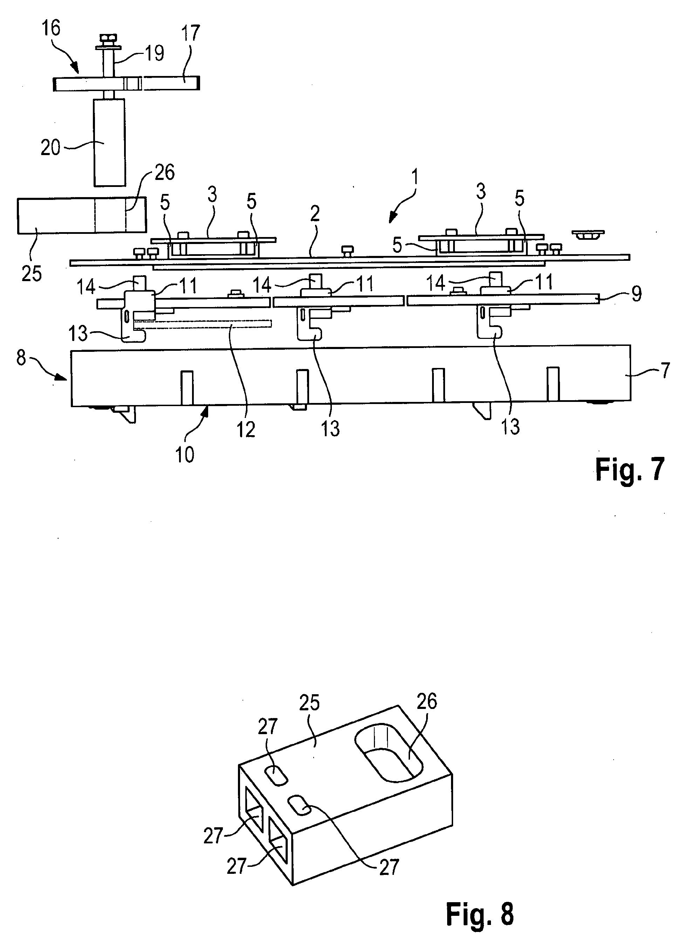

In Fig. 7 ist eine weitere Explosionsdarstellung des Sammelschienenadapters 1 gemäß Fig. 1 und 2 gezeigt. Das Ausführungsbeispiel des Sammelschienenadapters 1, wie es in Fig. 7 gezeigt ist, unterscheidet sich von dem Sammelschienenadapter 1 gemäß der Fig. 1 und 2 und der dazu gehörenden Fig. 3 bis 6 lediglich dadurch, dass ein zusätzliches Anschlussstück 25 vorgesehen ist, an welchem beispielsweise ein Stromwandler angeschlossen werden kann. Um unnötige Wiederholung zu vermeiden wird daher auf die Beschreibung zu Fig. 1 bis 6 verwiesen.

Wie aus Fig. 7 entnommen werden kann, ist das Anschlussstück 25 zwischen der Anschlussplatte 17 der Anschlusseinrichtung 16 und dem Adapter-Oberteil 2 vorgesehen. Das Anschlussstück 25 weist eine Öffnung 26 auf zum Hindurchführen des Verbindungsrohrs 20 der Anschlusseinrichtung 16 und des in dem Verbindungsrohr 20 geführten Schraubenelements 19. Des Weiteren ist das Anschlussstück 25 mit wenigstens einem Anschluss 27 für eine elektrische Einrichtung, z.B. einen Wandler wie einen Stromwandler usw., versehen.

Bedingt durch das Anschlussstück 25 lassen sich bei der Montage wahlweise zusätzlich noch elektrische Einrichtungen wie beispielsweise Wandler für die Strommessung oder Stromwandler usw. aufsetzen, bevor die Anschlusseinrichtung 16 montiert wird. Für die Wandlermontage wird dabei kein zusätzlicher Platz benötigt. Die Platzverhältnisse sind bei der Standardversion bereits vorhanden.

In Fig. 8 ist eine Perspektivansicht des Anschlussstücks 25 gemäß Fig. 7 gezeigt. Das Anschlussstück 25 weist dabei eine Öffnung 26 zum Hindurchführen wenigstens eines Verbindungsrohrs einer Anschlusseinrichtung auf. Des Weiteren weist das Anschlussstück 25 beispielsweise zwei Anschlüsse 27 für elektrische Einrichtungen wie z.B. Wandler usw. auf.

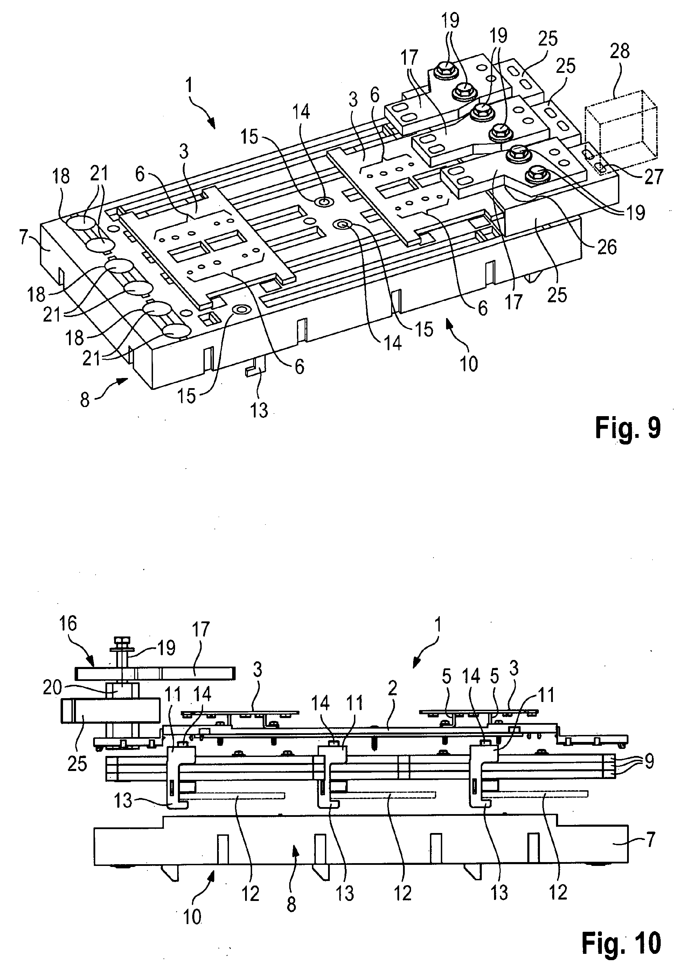

Fig. 9 zeigt eine Perspektivansicht des Sammelschienenadapters 1 gemäß Fig. 7. Dabei fasst eine Anschlusseinrichtung 16 die Ströme zweier Verbindungsschienen 9 einer Phase L1, L2 bzw. L3 zusammen. Zwischen der Anschlussplatte 17 der Anschlusseinrichtung 16 und dem Adapter-Oberteil 2 ist das zusätzliche Anschlussstück 25 vorgesehen. Das zusätzliche Anschlussstück 25 weist dabei eine Öffnung 26 zum Hindurchführen der beiden Verbindungsrohre 20 der Anschlusseinrichtung 16 auf. Des Weiteren ist an einem der beiden Anschlüsse 27 der Rohrverbindungseinrichtung 25, eine elektrische Einrichtung 28, z.B. ein Wandler, angeschlossen, wie mit einer strichpunktierten Linie in Fig. 9 angedeutet ist.

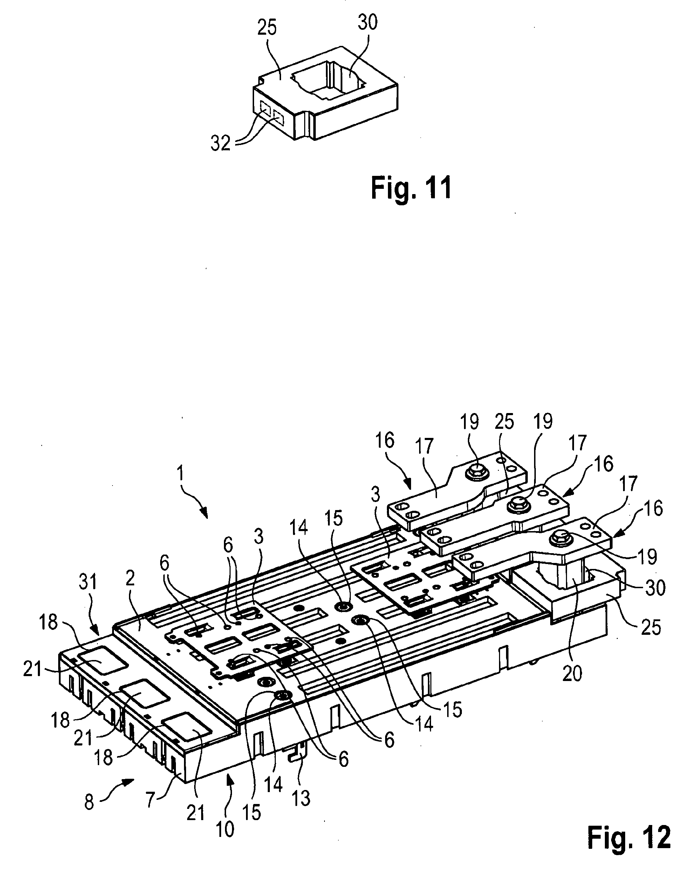

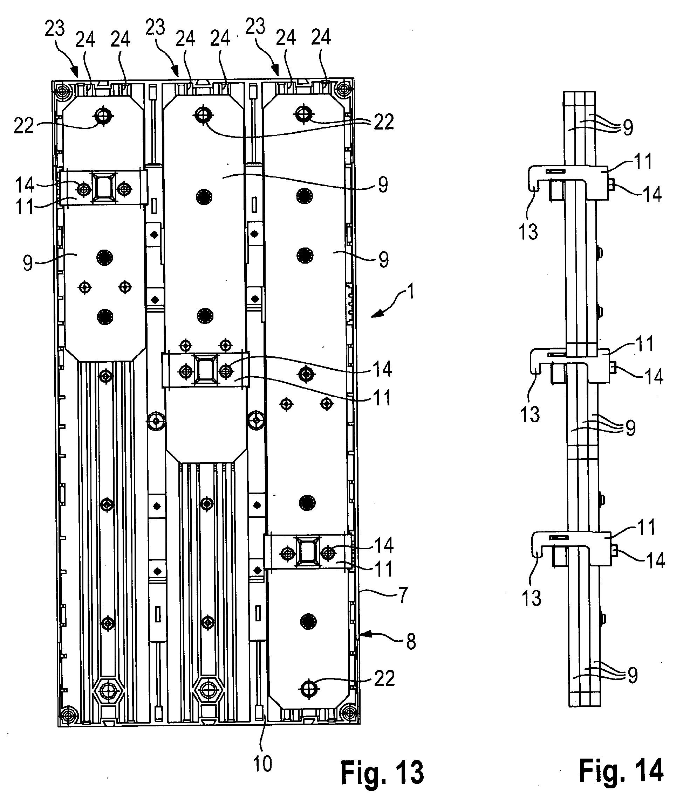

Fig. 10 zeigt eine Explosionsdarstellung eines Sammelschienenadapters gemäß einer weiteren Ausführungsform der Erfindung. Fig. 11 stellt dabei eine Perspektivansicht eines Anschlussstücks 25 zum Anschließen z.B. eines Stromwandlers dar, wie es bei dem Sammelschienenadapter 1 in Fig. 10 eingesetzt wird. Weiter zeigt Fig. 12 eine Perspektivansicht des zusammengebauten Sammelschienenadapters 1 und Fig. 13 eine Draufsicht auf das Gehäuse des Sammelschienenadapters. Außerdem ist in Fig. 14 eine Seitenansicht der Schienenpakete aus den Fig. 10 und 13 gezeigt.

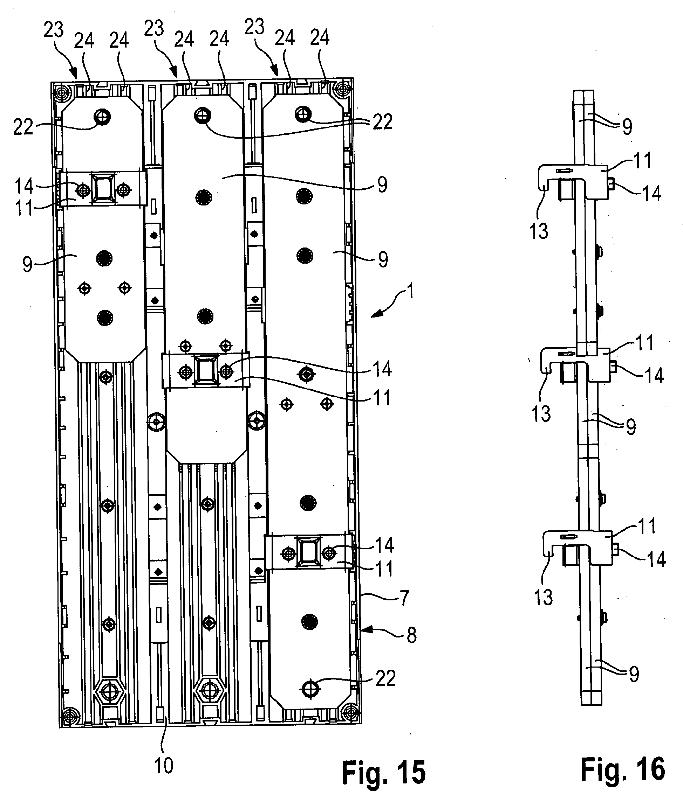

Diese Ausführungsform, wie sie in den Fig. 10-14 und nachfolgenden Fig. 15 und 16 beispielhaft gezeigt ist, weist im Wesentlichen denselben Aufbau auf, wie die zuvor mit Bezug auf die Fig. 1-9 beschriebene Ausführungsform und deren Ausführungsbeispiele.

Die Ausführungsform des Sammelschienenadapters gemäß der Fig. 10-16 unterscheidet sich von der Ausführungsform, wie sie in den Fig. 1-9 gezeigt ist, dadurch, dass statt zweier nebeneinander oder parallel zueinander angeordneter Verbindungschienen je Phase eine Verbindungsschiene 9 pro Phase vorgesehen wird. Es wird, wie in Fig. 10, 13 und Fig. 14 und nachfolgenden Fig. 15 und 16 gezeigt ist, eine insbesondere breite Schiene 9 statt zweier insbesondere schmaler Schienen pro Phase vorgesehen.

Wahlweise zusätzlich können über die jeweilige Verbindungsschiene 9 wenigstens eine, wie in nachfolgender Fig. 16, oder zwei zusätzliche Verbindungsschienen 9 gelegt und festgeklemmt werden, wie in Fig. 10 und 14 gezeigt ist.

Der Sammelschienenadapter 1 ist in dem in den Fig. 10-16 gezeigten Ausführungsbeispiel z.B. als ein Dreiphasen-Sammelschienenadapter ausgebildet. Der Sammelschienenadapter 1 kann gemäß der Erfindung auch ein oder zwei oder mehr als drei Phasen aufweisen. Der Sammelschienenadapter 1 weist ein Adapter-Oberteil 2 auf, auf welchem Halteplatten 3 befestigt sind.

Um elektrische Geräte, insbesondere Schaltgeräten 4, zu befestigen, weist die jeweilige Halteplatte 3 ein Befestigungs-Lochbild 6 eines oder mehrerer Schaltgeräte auf, wie in Fig. 12 gezeigt ist. Weiter weist der Sammelschienenadapter 1 ein Gehäuse 7 als Adapter-Unterteil 8 auf, in welcher flache oder plattenförmige Verbindungs- oder Stromschienen 9 aufnehmbar sind, wie in Fig. 10, 12, 13 und 15 gezeigt ist.

Das Adapter-Unterteil 8 oder Gehäuse 7 ist, derart gestaltet, dass bei unterschiedlichen Nennströmen die Bestückung mit Verbindungsschienen 9 flexibel vorgenommen werden kann. Für jede der drei Phasen L1, L2 und L3 des Dreiphasen-Sammelschienenadapters kann eine Verbindungsschiene oder wenigstens zwei übereinander angeordnete Verbindungsschienen in das Gehäuse eingesetzt werden.

So wird beispielsweise bei Nennströmen, die geringer sind als 800A je Phase nur eine Garnitur von jeweils einer Verbindungsschiene pro Phase eingelegt. Folglich werden in diesem Fall auch nur drei Kontaktierungsklemmen zur elektrischen Kontaktierung der insgesamt drei Verbindungsschienen benötigt.

Bei Nennströmen von über 800A werden jeweils wenigstens zwei übereinander angeordnete Verbindungsschienen 9 in die zugeordneten Aufnahmen des Gehäuses 7 für jede Phase L1, L2 und L3 eingelegt und mit einer Kontaktierungsklemme kontaktiert, wie in nachfolgenden Fig. 15 und 16 gezeigt ist. Dem entsprechend werden in diesem Fall ebenfalls nur drei Kontaktierungsklemmen zur elektrischen Kontaktierung der insgesamt sechs Verbindungsschienen 9 eingesetzt.

In Fig. 10 und 12-14 sind bei einem Nennstrom von bis zu 1600A oder höher beispielsweise drei übereinander angeordnete Verbindungsschienen 9 für jede Phase L1, L2 und L3 in den zugeordneten Aufnahmen des Gehäuses 7 eingelegt und mit einer Kontaktierungsklemme kontaktiert. Somit werden ebenfalls nur drei Kontaktierungsklemmen zur elektrischen Kontaktierung der insgesamt neun Verbindungsschienen benötigt.

Der Sammelschienenadapter 1 wird anschließend auf zugeordnete Sammelschienen 12 aufgesteckt. Die Sammelschienen 12 werden dabei, wie in dem Ausführungsbeispiel in Fig. 10 mit einer gestrichelten Linie angedeutet ist, in entsprechende Kontaktaufnahmen 13 der Kontaktierungsklemmen 11 eingeführt und an der zugeordneten Verbindungsschiene 9 festgeklemmt und elektrisch kontaktiert. Die jeweilige Kontaktierungsklemme 11 weist dazu in dem in den Fig. 12 gezeigten Ausführungsbeispiel, eine Schraube 14 mit einem Innensechskant auf und ist durch eine zugeordnete Öffnung 15 in dem Adapter-Oberteil 2 von außen für einen Benutzer zugänglich.

Mit Anschlusseinrichtungen 16 werden die Ströme der Verbindungsschienen 9 zu einem jeweiligen Schaltgerät 4 geführt, das an den Halteplatten befestigt ist. Die Anschlusseinrichtung 16 weist eine Anschlussplatte 17 auf, zum Verbinden der drei übereinander angeordneten Verbindungsschienen 9 für jede Phase L1, L2, L3 mit einem Schaltgerät 4.

Für die Anschlusseinrichtungen 16 sind Öffnungen 18 in dem Adapter-Oberteil 2 vorgesehen zum Verbinden mit dem jeweiligen Pack aus einer oder wenigstens zwei übereinander angeordneten Verbindungsschienen 9. Die Öffnungen 18 sind dabei oberhalb z.B. eines oder beider Enden, wie in Fig. 10 und 12 gezeigt ist, der in dem Adapter-Unterteil 8 bzw. Gehäuse 7 aufgenommenen Verbindungsschienen 9 angeordnet, so dass die Verbindungsschienen 9 an wenigstens einem oder vorzugsweise ihren beiden Enden mit der zugeordneten Anschlusseinrichtung 16 verbindbar sind.

Die Anschlusseinrichtung 16 weist jeweils die Anschlussplatte 17 zum Verbinden mit einem auf der Halteplatte 3 befestigen Schaltgerät 4 auf. Des Weiteren ist an der Anschlussplatte 17 ein Schraubenelement 19 befestigt. Das Schraubenelement 19 ist in einem Verbindungsrohr 20 geführt und wird an dem zugeordneten Pack aus einer oder wenigstens zwei übereinander angeordneten Verbindungsschiene 9 befestigt. Das Verbindungsrohr 20 wird mit dem Schraubenelement 19 dazu durch die Öffnung 18 in dem Adapter-Oberteil 2 hindurchgeführt und das Schraubenelement 19 mit der Verbindungsschiene 9 verschraubt.

Die Öffnungen 18 auf der Seite des Adapter-Oberteils 2, die nicht benötigt bzw. in die keine Verbindungsrohre 20 mit Schraubenelementen 19 eingesetzt werden, sind z.B. mit Abdeckungen 21 für die Verbindungsrohre 20 oder mit nicht dargestellten Wechselstempel im Werkzeug einseitig verschlossen.

In dem in den Fig. 10-14 gezeigten Ausführungsbeispiel ist optional ein Anschlussstück 25 für z.B. einen zusätzlichen Wandler, insbesondere Stromwandler, vorgesehen, welches zwischen der Anschlussplatte 17 der Anschlusseinrichtung 16 und dem Adapter-Oberteil 2 vorgesehen ist. Das Anschlussstück 25 weist eine Öffnung 30 auf zum Hindurchführen des Verbindungsrohrs 20 der Anschlusseinrichtung 16 und des in dem Verbindungsrohr 20 geführten Schraubenelements 19. Das Verbindungsrohr 20 kann dabei eine nicht dargestellte zylindrische Form oder wie in Fig. 10 und 12 angedeutet ist auch z.B. eine eckige Form aufweisen, und in die z.B. entsprechend eckig geformte Öffnung 30 eingesetzt werden. Für die Wandlermontage wird somit kein zusätzlicher Platz benötigt. Die Platzverhältnisse sind bei der Standardversion bereits vorhanden. Das Anschlussstück 25 weist des Weiteren wenigstens einen Anschluss 32 für einen elektrischen Anschluss auf.

Das Adapter-Unterteil 8 kann außerdem, wie in Fig. 10 und 12 gezeigt ist, optional zusätzlich mit einer Aufnahme 31, z.B. in Form einer Vertiefung oder Stufe, für das Anschlussstück 25 versehen sein, so dass eine besonders kompakte Bauweise erzielt werden kann.
In Fig. 15 ist eine Draufsicht auf das Gehäuse des Sammelschienenadapters gemäß der Fig. 10 und 12 gezeigt, wobei in diesem Fall drei unterschiedliche lange Schienenpakete bestehend aus jeweils nur zwei übereinander angeordneten Verbindungsschienen 9 in dem Gehäuse angeordnet sind. Fig. 16 zeigt des Weiteren eine Seitenansicht der Schienenpakete aus Fig. 15. Wie zuvor beschrieben können beispielsweise zwei übereinander angeordnete Verbindungsschienen pro Phase bei Nennströmen von mehr als 800A eingesetzt.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Insbesondere sind die zuvor beschriebenen Ausführungsformen und Ausführungsbeispiele miteinander kombinierbar, insbesondere einzelne Merkmale davon.

Der vorliegend beschriebene Sammelschienenadapter kann beispielsweise als ein 185mm-Sammelschienenadapter für Ströme von z.B. bis 1600A ausgebildet sein. Die Erfindung ist aber auf diese Ausführungsform nicht beschränkt.

**Bezugszeichenliste**

| | | | |
|---|---|---|---|
| 1 | Sammelschienenadapter | 31 | Aufnahme |
| 2 | Adapter-Oberteil | 32 | Anschluss |
| 3 | Halteplatte | | |
| 4 | Schaltgerät | | |
| 5 | Distanzabschnitt | | |
| 6 | Befestigungs-Lochbild | | |
| 7 | Gehäuse | | |
| 8 | Adapter-Unterteil | | |
| 9 | Verbindungsschiene | | |
| 10 | Boden | | |
| 11 | Kontaktierungsklemme | | |
| 12 | Sammelschiene | | |
| 13 | Kontaktaufnahme | | |
| 14 | Schraube | | |
| 15 | Öffnung | | |
| 16 | Anschlusseinrichtung | | |
| 17 | Anschlussplatte | | |
| 18 | Öffnung für Anschlusseinrichtung | | |
| 19 | Schraubenelement | | |
| 20 | Verbindungsrohr | | |
| 21 | Abdeckung | | |
| 22 | Gewinde | | |
| 23 | Aufnahme | | |
| 24 | Steg | | |
| 25 | Anschlussstück | | |
| 26 | Öffnung | | |
| 27 | Anschluss | | |
| 28 | elektrische Einrichtung | | |
| 30 | Öffnung | | |

## Patentansprüche

1. Sammelschienenadapter (1) aufweisend ein Adapter-Unterteil (8), das einen Boden (10) mit Aufnahmen (23) zur Aufnahme von Verbindungsschienen (9) aufweist, welche mit Sammelschienen (12) elektrisch kontaktierbar sind, wobei die Zahl der Verbindungsschienen (9) pro Phase, welche in den Aufnahmen (23) des Adapter-Unterteils (8) aufnehmbar sind, variierbar ist und die Verbindungsschienen (9) mit wenigstens einem an einem Adapter-Oberteil (2) des Sammelschienenadapters (1) befestigbaren elektrischen Gerät (4) elektrisch verbindbar sind.

2. Sammelschienenadapter nach Anspruch 1, wobei wenigstens eine Verbindungsschiene (9) pro Phase vorgesehen ist, wobei wenigstens eine Verbindungsschiene einer Phase mit wenigstens einer zusätzlichen Verbindungsschiene (9) verbindbar ist, wobei die Verbindungsschienen (9) dabei übereinander gestapelt werden.

3. Sammelschienenadapter nach Anspruch 1, wobei wenigstens zwei Verbindungsschienen (9) pro Phase vorgesehen sind, wobei die wenigstens zwei Verbindungsschienen (9) nebeneinander und insbesondere parallel zueinander angeordnet sind.

4. Sammelschienenadapter nach einem der vorangehenden Ansprüche, wobei der Sammelschienenadapter (1) wenigstens eine Anschlusseinrichtung (16) aufweist, welche derart ausgebildet ist, dass sie die Ströme mehrerer Verbindungsschienen (9) pro Phase zusammenzufasst.

5. Sammelschienenadapter nach Anspruch 4, wobei die Anschlusseinrichtung (16) eine Anschlussplatte (17), wenigstens ein Verbindungsrohr (20) und ein in dem Verbindungsrohr (20) geführtes Schraubenelement (19) aufweist, wobei das wenigstens eine Schraubenelement (19) an einem Ende mit einer Verbindungsschiene (9) verbindbar und an dem anderen Ende an der Anschlussplatte (17) befestigbar ist, wobei die Anschlussplatte (17) mit wenigstens einem elektrischen Gerät (4), insbesondere einem Schaltgerät, verbindbar ist.

6. Sammelschienenadapter nach Anspruch 4 oder 5, wobei das Adapter-Oberteil (2) wenigstens eine Öffnung (18) und vorzugsweise mehrere Öffnungen (18) zum Hindurchführen der Anschlusseinrichtung (16) und zum Verbinden der Anschlusseinrichtung (16) mit einer zugeordneten Verbindungsschiene (9) aufweist.

7. Sammelschienenadapter nach Anspruch 6, wobei die Öffnungen (18) durch eine jeweilige Abdeckung (21) abdeckbar sind, wobei die Abdeckung (21) als Deckel oder als durchstoßbare Abdeckung ausgebildet ist oder die Öffnungen (18) mittels wenigstens eines Werkzeugstempels verschließbar sind.

8. Sammelschienenadapter nach einem der vorangehenden Ansprüche 4 bis 7, wobei das Adapter-Oberteil (2) symmetrisch ausgebildet ist und ein Ende des Adapter-Oberteils (2) mit den Öffnungen (18) zum Hindurchführen der Anschlusseinrichtung (16) ausgebildet ist.

9. Sammelschienenadapter nach einem der vorangehenden Ansprüche, wobei wenigstens eine Aufnahme (23) des Adapter-Unterteils (8) Stege (24) als Auflagefläche für eine in der Aufnahme (23) aufgenommene Verbdingungsschiene (9) aufweist, wobei der Boden (10) zwischen den Stegen (24) geschlossen oder zwischen den Stegen (24) Öffnungen zur Luftzirkulation vorgesehen sind.

10. Sammelschienenadapter nach einem der vorangehenden Ansprüche, wobei der Sammelschienenadapter (1) wenigstens eine Halteplatte (3) aufweist mit wenigstens einem Lochbild (6) zum Befestigen des wenigstens einen elektrischen Geräts (4), insbesondere Schaltgeräts.

11. Sammelschienenadapter nach einem der vorangehenden Ansprüche, wobei der Sammelschienenadapter eine Kontaktierungsklemme (11) aufweist, zum Aufschieben des Sammelschienenadapters auf eine Sammelschiene (12) und zum elektrischen Kontaktieren einer Verbindungsschiene (9) mit der Sammelschiene (12).

12. Sammelschienenadapter nach Anspruch 11, wobei die Kontaktierungsklemme (11) vorzugsweise eine Schraube (14) mit einem Innensechskant aufweist zum Klemmen der Verbindungsschiene (9) an die in der Kontaktierungsklemme (11) aufgenommene Sammelschiene (12), wobei die Schraube (14) durch eine Öffnung (15) in dem Adapter-Oberteil (2) von außen berührungssicher betätigbar ist.

13. Sammelschienenadapter nach einem der Ansprüche 3 bis 11, wobei der Sammelschienenadapter (1) wenigstens ein Anschlussstück (25) aufweist, wobei das Anschlussstück (25) eine Öffnung (26, 30) aufweist zum Hindurchführen wenigstens eines Verbindungsrohrs (20) der Anschlusseinrichtung (16) und wobei das Anschlussstück (25) wenigstens einen Anschluss (27, 32) für eine elektrische Einrichtung (28), insbesondere einen Wandler, vorzugsweise einen Stromwandler, aufweist.

14. Sammelschienenadapter nach einem der vorangehenden Ansprüche, wobei die Aufnahmen (23) des Adapter-Unterteils (8) derart ausgebildet sind, Verbindungsschienen (9) derselben und/oder unterschiedlicher Länge aufzunehmen, wobei die Verbindungsschienen (9) einer Phase oder verschiedener Phasen dieselbe oder eine unterschiedliche Länge aufweisen, und wobei wenigstens eine Verbindungsschiene (9) wenigstens einer Phase an einem oder beiden Enden durch eine Anschlusseinrichtung (16) kontaktierbar ist.

15. System mit Sammelschienen (12) und einem Sammelschienenadapter (1) gemäß einem der vorangehenden Ansprüche, wobei in den Aufnahmen (23) des Sammelschienenadapters (1) wenigstens eine Verbindungsschiene (9) pro Phase aufgenommen ist, wobei die Verbindungsschienen (9) dieselbe oder eine unterschiedliche Länge aufweisen und wobei die Verbindungsschiene (9) wenigstens einer Phase an einem oder beiden Enden durch eine Anschlusseinrichtung (16) kontaktierbar ist und wobei die Verbindungsschienen (9) vorzugsweise flache oder plattenförmige Verbindungsschienen (9) sind, die insbesondere aus Kupfer bestehen.

## Claims

1. Busbar adapter (1) comprising an adapter lower part (8) which comprises a base (10) having receivers (23) for receiving connection bars (9) which can be electrically contacted with busbars (12), wherein the number of connection bars (9) per phase which can be received in the receivers (23) of the adapter lower part (8) is variable, and the connection bars (9) can be electrically connected to at least one electrical device (4) which can be fastened to an adapter upper part (2) of the busbar adapter (1).

2. Busbar adapter as claimed in claim 1, wherein at least one connection bar (9) per phase is provided, wherein at least one connection bar of a phase can be connected to at least one additional connection bar (9), the connection bars (9) being stacked on top of one another.

3. Busbar adapter as claimed in claim 1, wherein at least two connection bars (9) per phase are provided, wherein the at least two connection bars (9) are arranged side by side and in particular in a mutually parallel manner.

4. Busbar adapter as claimed in any one of the preceding claims, wherein the busbar adapter (1) comprises at least one attachment device (16) which is formed so as to combine the currents of a plurality of connection bars (9) per phase.

5. Busbar adapter as claimed in claim 4, wherein the attachment device (16) comprises an attachment plate (17), at least one connection tube (20) and a screw element (19) guided in the connection tube (20), wherein the at least one screw element (19) can be connected to a connection bar (9) at one end and can be fastened to the attachment plate (17) at the other end, wherein the attachment plate (17) can be connected to at least one electrical device (4), in particular a switching device.

6. Busbar adapter as claimed in claim 4 or 5, wherein the adapter upper part (2) comprises at least one opening (18) and preferably a plurality of openings (18) for passing the attachment device (16) through and for connecting the attachment device (16) to an associated connection bar (9).

7. Busbar adapter as claimed in claim 6, wherein the openings (18) can be covered by a respective cover (21), wherein the cover (21) is in the form of a lid or a pierceable cover, or the openings (18) can be closed by means of at least one punch tool.

8. Busbar adapter as claimed in any one of the preceding claims 4 to 7, wherein the adapter upper part (2) is formed symmetrically and one end of the adapter upper part (2) is formed with the openings (18) for passing the attachment device (16) through.

9. Busbar adapter as claimed in any one of the preceding claims, wherein at least one receiver (23) of the adapter lower part (8) comprises webs (24) as a support surface for a connection bar (9) received in the receiver (23), wherein the base (10) is closed between the webs (24), or openings for air circulation are provided between the webs (24).

10. Busbar adapter as claimed in any one of the preceding claims, wherein the busbar adapter (1) comprises at least one holding plate (3) having at least one hole pattern (6) for fastening the at least one electrical device (4), in particular a switching device.

11. Busbar adapter as claimed in any one of the preceding claims, wherein the busbar adapter comprises a contact clamp (11) for pushing the busbar adapter onto a busbar (12) and for electrically contacting a connection bar (9) with the busbar (12).

12. Busbar adapter as claimed in claim 11, wherein the contact clamp (11) preferably comprises a screw (14) having a hexagonal socket for clamping the connection bar (9) to the busbar (12) received in the contact clamp (11), wherein the screw (14) can be actuated from outside through an opening (15) in the adapter upper part (2) without risk of contact.

13. Busbar adapter as claimed in any one of claims 3 to 11, wherein the busbar adapter (1) comprises at least one attachment piece (25), wherein the attachment piece (25) comprises an opening (26, 30) for passing at least one connection tube (20) of the attachment device (16) through, and wherein the attachment piece (25) comprises at least one terminal (27, 32) for an electrical device (28), in particular a transformer, preferably a current transformer.

14. Busbar adapter as claimed in any one of the preceding claims, wherein the receivers (23) of the adapter lower part (8) are formed so as to receive connection bars (9) of the same and/or different lengths, wherein the connection bars (9) of a phase or of different phases are of the same or a different length, and wherein at least one connection bar (9) of at least one phase can be contacted at one or both ends by an attachment device (16).

15. System comprising busbars (12) and a busbar adapter (1) as claimed in any one of the preceding claims, wherein at least one connection bar (9) per phase is received in the receivers (23) of the busbar adapter (1), wherein the connection bars (9) are of the same or different lengths, and wherein the connection bar (9) of at least one phase can be contacted at one or both ends by an attachment device (16), and wherein the connection bars (9) are preferably planar or plate-like connection bars (9), in particular made from copper.

## Revendications

1. Adaptateur de jeux de barres (1) présentant une partie inférieure (8) d'adaptateur qui présente un fond (10) muni de logements (23) destinés à loger des barres de raccordement (9), lesquelles peuvent être mises en contact électrique avec des jeux de barres (12), dans lequel le nombre de barres de raccordement (9) par phase, qui peuvent être logées dans les logements (23) de la partie inférieure (8) d'adaptateur, est variable et dans lequel les barres de raccordement (9) sont électriquement raccordables à au moins un appareil électrique (4) fixable sur une partie supérieure (2) d'adaptateur de l'adaptateur de jeu de barres (1).

2. Adaptateur de jeux de barres selon la revendication 1, dans lequel au moins une barre de raccordement (9) est ménagée par phase, dans lequel au moins une barre de raccordement d'une phase est raccordable à au moins une barre de raccordement supplémentaire (9), dans lequel les barres de raccordement (9) sont à cet effet empilées les unes sur les autres.

3. Adaptateur de jeux de barres selon la revendication 1, dans lequel au moins deux barres de raccordement (9) sont ménagées par phase, dans lequel les au moins deux barres de raccordement (9) sont disposées les unes à côté des autres et notamment parallèlement les unes aux autres.

4. Adaptateur de jeux de barres selon l'une quelconque des revendications précédentes, dans lequel l'adaptateur de jeux de barres (1) présente au moins un moyen de raccordement (16), lequel est réalisé de manière à ce qu'il regroupe les courants de plusieurs barres de raccordement (9) par phase.

5. Adaptateur de jeux de barres selon la revendication 4, dans lequel le moyen de raccordement (16) présente une plaque de raccordement (17), au moins un tube de raccordement (20) et un élément à vis (19) guidé dans le tube de raccordement (20), dans lequel l'au moins un élément à vis (19) est raccordable sur une extrémité à une barre de raccordement (9) et est fixable sur la plaque de raccordement (17) sur l'autre extrémité, dans lequel la plaque de raccordement (17) est raccordable à au moins un appareil électrique (4), notamment un appareil de commutation.

6. Adaptateur de jeux de barres selon la revendication 4 ou 5, dans lequel la partie supérieure (2) d'adaptateur présente au moins une ouverture (18), et de préférence plusieurs ouvertures (18) destinées au passage du moyen de raccordement (16) et au raccordement du moyen de raccordement (16) à une barre de raccordement associée (9).

7. Adaptateur de jeux de barres selon la revendication 6, dans lequel les ouvertures (18) peuvent être recouvertes par un recouvrement respectif (21), dans lequel le recouvrement (21) est réalisé comme couvercle ou comme recouvrement pouvant être perforé, ou dans lequel les ouvertures (18) peuvent être obturées au moyen d'au moins un outil de poinçonnage.

8. Adaptateur de jeux de barres selon l'une quelconque des revendications précédentes 4 à 7, dans lequel la partie supérieure (2) d'adaptateur est réalisée de manière symétrique et dans lequel une extrémité de la partie supérieure (2) d'adaptateur munie des ouvertures (18) est réalisée pour le passage du moyen de raccordement (16).

9. Adaptateur de jeux de barres selon l'une quelconque des revendications précédentes, dans lequel au moins un logement (23) de la partie inférieure (8) d'adaptateur présente des nervures (24) en tant que surface d'appui pour une barre de raccordement (9) logée dans le logement (23), dans lequel le fond (10) entre les nervures (24) est fermé, ou dans lequel des ouvertures sont ménagées entre les nervures (24) pour la circulation d'air.

10. Adaptateur de jeux de barres selon l'une quelconque des revendications précédentes, dans lequel l'adaptateur de jeux de barres (1) présente au moins une plaque de maintien (3) comprenant au moins une configuration de perçage (6) pour la fixation de l'au moins un appareil électrique (4), notamment de l'appareil de commutation.

11. Adaptateur de jeux de barres selon l'une quelconque des revendications précédentes, dans lequel l'adaptateur de jeux de barres présente une borne de connexion (11) pour faire glisser l'adaptateur de jeux de barres sur un jeu de barres (12) et pour la connexion électrique d'une barre de raccordement (9) avec le jeu de barres (12).

12. Adaptateur de jeux de barres selon la revendication 11, dans lequel la borne de connexion (1) présente de préférence une vis (14) munie de six pans creux pour raccorder la barre de raccordement (9) au jeu de barres (12) logé dans la borne de connexion (11), dans lequel la vis (14) peut être actionnée de l'extérieur de manière protégée contre les contacts accidentels à travers une ouverture (15) dans la partie supérieure (2) d'adaptateur.

13. Adaptateur de jeux de barres selon l'une quelconque des revendications 3 à 11, dans lequel l'adaptateur de jeux de barres (1) présente au moins une pièce de raccordement (25), dans lequel la pièce de raccordement (25) présente une ouverture (26, 30) pour le passage d'au moins un tube de raccordement (20) du moyen de raccordement (16) et dans lequel la pièce de raccordement (25) présente au moins un raccord (27, 32) pour un moyen électrique (28), notamment un convertisseur, de préférence un transformateur de courant.

14. Adaptateur de jeux de barres selon l'une quelconque des revendications précédentes, dans lequel les logements (23) de la partie inférieure (8) d'adaptateur sont réalisés de manière à loger les barres de raccordement (9) de même longueur et/ou de différentes longueurs, dans lequel les barres de raccordement (9) d'une phase ou de différentes phases présentent la même longueur ou une longueur différente, et dans lequel au moins une barre de raccordement (9) d'au moins une phase est connectable sur une extrémité ou sur les deux extrémités au moyen d'un moyen de raccordement (16).

15. Système comprenant des jeux de barres (12) et un adaptateur de jeux de barres (1) selon l'une quelconque des revendications précédentes, dans lequel au moins une barre de raccordement (9) par phase est logée dans les logements (23) de l'adaptateur de jeux de barres (1), dans lequel les barres de raccordement (9) présentent la même longueur ou une longueur différente et dans lequel la barre de raccordement (9) d'au moins une phase est connectable sur une extrémité ou sur les deux extrémités au moyen d'un moyen de raccordement (16) et dans lequel les barres de raccordement (9) sont de préférence plates ou en forme de plaque, lesquelles sont notamment constituées de cuivre.
